(19) 

Europäisches
Patentamt
European
Patent Office
Office européen
des brevets

(11) **EP 2 453 519 A2**

(12) # EUROPEAN PATENT APPLICATION
published in accordance with Art. 153(4) EPC

(43) Date of publication:
**16.05.2012 Bulletin 2012/20**

(51) Int Cl.:
***H01P 7/00*** *(2006.01)*

(21) Application number: **10797284.6**

(22) Date of filing: **06.07.2010**

(86) International application number:
**PCT/KR2010/004392**

(87) International publication number:
**WO 2011/005010 (13.01.2011 Gazette 2011/02)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **06.07.2009 KR 20090060984**

(71) Applicant: **Samsung Electronics Co., Ltd.
Suwon-si, Gyeonggi-do 443-742 (KR)**

(72) Inventors:
• **HONG, Young-tack
Yongin-si
Gyeonggi-do 449-712 (KR)**
• **LEE, Jung Hae
Seoul 121-791 (KR)**
• **KWON, Sang Wook
Yongin-si
Gyeonggi-do 449-712 (KR)**
• **PARK, Eun Seok
Yongin-si
Gyeonggi-do 449-712 (KR)**
• **PARK, Jae Hyun
Seoul 121-791 (KR)**
• **PARK, Byung Chul
Seoul 121-791 (KR)**

(74) Representative: **D'Halleweyn, Nele Veerle Trees
Gertrudis
Arnold & Siedsma
Sweelinckplein 1
2517 GK The Hague (NL)**

(54) **WIRELESS POWER TRANSMISSION SYSTEM AND RESONATOR FOR THE SYSTEM**

(57) Provided is a wireless power resonator. The wireless power resonator may include a transmission line and a capacitor, may form a loop structure, and may further include a matcher to determine an impedance of the wireless power resonator.

**FIG. 2**
200

EP 2 453 519 A2

**Description**

Technical Field

The following description relates to a wireless power transmission system, and more particularly, to a method for designing a resonator for a wireless power transmission system.

Background Art

One of the wireless power transmission technologies may use a resonance characteristic of radio frequency (RF) devices. A resonator using a coil structure may require a change in a physical size based on a frequency.

Disclosure of Invention

In one general aspect, there is provided a wireless power resonator, including a transmission line including a first signal conducting portion, a second signal conducting portion, and a ground conducting portion corresponding to the first signal conducting portion and the second signal conducting portion, a first conductor that electrically connects the first signal conducting portion and the ground conducting portion, a second conductor that electrically connects the second signal conducting portion and the ground conducting portion, and at least one capacitor inserted between the first signal conducting portion and the second signal conducting portion in series with respect to a current flowing through the first signal conducting portion and the second signal conducting portion.

The transmission line, the first conductor, and the second conductor may form a loop structure.

The transmission line, the first conductor, and the second conductor may form a loop structure provided in a rectangular shape.

The wireless power resonator may further include a matcher, disposed inside a loop formed by the transmission line, the first conductor, and the second conductor, to determine an impedance of the wireless power resonator.

The matcher may be provided in a rectangular shape.

The matcher may change a physical size of the matcher so as to adjust the impedance of the wireless power resonator based on a control signal provided by a controller.

The controller may generate the control signal based on a state of an opposite resonator that receives power from the wireless power resonator or transmits power to the wireless power resonator.

The controller may generate the control signal based on at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

The matcher may be a conductor for impedance matching, which is located at a predetermined distance away from the ground conducting portion, and the impedance of the wireless power resonator may be adjusted based on a distance between the ground conducting portion and the conductor for the impedance matching.

The matcher may include at least one active element that adjusts the impedance of the wireless power resonator based on a control signal provided by a controller.

The at least one capacitor, corresponding to a lumped element, may be inserted between the first signal conducting portion and the second signal conducting portion.

The at least one capacitor, corresponding to a distributed element, may have a zigzagged structure.

A capacitance of the at least one capacitor may be determined based on at least one of criteria including a criterion for enabling the wireless power resonator to have a characteristic of a metamaterial, a criterion for enabling the wireless power resonator to have a negative magnetic permeability in a target frequency, and a criterion for enabling the wireless power resonator to have a zeroth-order resonance characteristic in the target frequency.

A surface of the first signal conducting portion or a surface of the second signal conducting portion may include a plurality of conductor lines in parallel, and one end of each conductor line may be shorted.

The first signal conducting portion and the ground conducting portion may be seamlessly connected to each other, and the second signal conducting portion and the ground conducting portion are seamlessly connected to each other.

An internal portion of at least one of the first signal conducting portion, the second signal conducting portion, and the ground conducting portion may be empty.

The wireless power resonator may further include a magnetic core that penetrates the first signal conducting portion, the second signal conducting portion, and the ground conducting portion.

When the wireless power resonator includes at least two transmission lines, the at least two transmission lines may be connected in series, in parallel, or in a spiral, and at least one capacitor may be inserted between a first signal conductor and a second signal conductor included in each transmission line.

In another general aspect, there is provided a wireless power transmitter, including a pre-processor to generate a frequency and a current for wireless power transmission using energy supplied from a power supplier, and a wireless power resonator to wirelessly transmit power using the current at the generated frequency, and the wireless power resonator includes a transmission line including a first signal conducting portion, a second signal conducting portion, and a ground conducting portion corresponding to the first signal conducting portion and the second signal conducting portion, a first conductor to electrically connect the first signal conducting portion and the ground conducting portion, a second conductor to electrically connect the second signal conducting portion and the ground conducting portion, and at least one capacitor inserted between the first signal conducting portion and the second signal conducting portion in series with respect to a current flowing through the first signal conducting portion and the second signal conducting portion.

The pre-processor may include an alternating current-direct current (AC/DC) converter to convert AC energy supplied from a power supplier into DC energy, and a frequency generator to generate a current having a frequency based on the DC energy.

The wireless power transmitter may further include a controller to generate a control signal based on at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

The wireless power transmitter may further include a detector to detect at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

The controller may adjust a frequency based on at least one of the distance between the wireless power resonator and the wireless power resonator of the wireless power receiver, the reflection coefficient of the wave transmitted from the wireless power resonator to the wireless power resonator of the wireless power receiver, the power transmission gain between the wireless power resonator and the wireless power resonator of the wireless power receiver, and the coupling efficiency between the wireless power resonator and the wireless power resonator of the wireless power receiver.

In another general aspect, there is provided a wireless power receiver, including a wireless power resonator to receive power wirelessly, and a rectifier to convert the received power into direct current (DC) energy, and the wireless power resonator includes a transmission line including a first conducting signal portion, a second signal conducting portion, and a ground conducting portion corresponding to the first signal conducting portion and the second signal conducting portion, a first conductor to electrically connect the first signal conducting portion and the ground conducting portion, a second conductor to electrically connect the second signal conducting portion and the ground conducting portion, and at least one capacitor inserted between the first signal conducting portion and the second signal conducting portion in series with respect to a current flowing through the first signal conducting portion and the second signal conducting portion.

The wireless power receiver may further include a controller to generate a control signal based on at least one of a distance between the wireless power resonator and a wireless power resonator of a wireless power transmitter, a reflection coefficient of a wave transmitted from the wireless power resonator of the wireless power transmitter to the wireless power resonator, a power transmission gain between the wireless power resonator and the wireless power resonator of the wireless power transmitter, and a coupling efficiency between the wireless power resonator and the wireless power resonator of the wireless power transmitter.

In another general aspect, there is provided a wireless power transmitting method, the method including generating a frequency and a current for wireless power transmission using energy supplied from a power supplier, and providing the frequency and the current to a wireless power resonator, and the wireless power resonator includes a transmission line including a first signal conducting portion, a second signal conducting portion, and a ground conducting portion corresponding to the first signal conducting portion and the second signal conducting portion, a first conductor to electrically connect the first signal conducting portion and the ground conducting portion, a second conductor to electrically connect the second signal conducting portion and the ground conducting portion, and at least one capacitor inserted between the first signal conducting portion and the second signal conducting portion in series with respect to a current flowing through first signal conducting portion and the second signal conducting portion.

In another general aspect, there is provided a wireless power receiving method, the method including receiving power wirelessly, using a wireless power resonator, converting the received power into direct current (DC) energy using a rectifier, and providing the DC energy to a target device, and the wireless power resonator includes a transmission line including a first signal conducting portion, a second signal conducting portion, and a ground conducting portion corresponding to the first signal conducting portion and the second signal conducting portion, a first conductor to electrically connect the first signal conducting portion and the ground conducting portion, a second conductor to electrically connect the second signal conducting portion and the ground conducting portion, and at least one capacitor inserted between the first signal conducting portion and the second signal conducting portion in series with respect to a current flowing through the first signal conducting portion and the second signal conducting portion.

The method may further include storing the DC energy in a power storage unit.

The method may further include utilizing the DC energy as power for the target device.

In another general aspect, there is provided a wireless power transmission/reception system, the system including a wireless power transmitter, and a wireless power receiver, and the wireless power transmitter includes a preprocessor to generate a frequency and a current for wireless power transmission using energy supplied from a power supplier, and a wireless power transmission resonator to transmit power wirelessly to the wireless power receiver using the current at the frequency, the wireless power receiver includes a wireless power reception resonator to receive power wirelessly from the wireless power transmitter, and a rectifier to convert the received power into DC energy, and at least one of the wireless power transmission resonator and the wireless power reception resonator includes a transmission line including a first signal conducting portion, a second signal conducting portion, and a ground conducting portion corresponding to the first signal conducting portion and the second signal conducting portion, a first conductor to electrically connect the first signal conducting portion and the ground conducting portion, a second conductor to electrically connect the second signal conducting portion and the ground conducting portion, and at least one capacitor inserted between the first signal conducting portion and the second signal conducting portion in series with respect to a current flowing through the first signal conducting portion and the second signal conducting portion.

The at least one of the wireless power transmission resonator and the wireless power reception resonator may further include a matcher, disposed inside a loop formed by the transmission line, the first conductor, and the second conductor, to determine an impedance of the wireless power resonator.

Brief Description of Drawings

FIG. 1 is a diagram illustrating an example of a wireless power transmission system including resonators for wireless power transmission.

FIG. 2 is a diagram illustrating an example of a resonator having a two-dimensional (2D) structure.

FIG. 3 is a diagram illustrating an example of a resonator having a three-dimensional (3D) structure.

FIG. 4 is a diagram illustrating an example of a resonator for wireless power transmission configured as a bulk type.

FIG. 5 is a diagram illustrating an example of a resonator for wireless power transmission configured as a hollow type.

FIG. 6 is a diagram illustrating an example of a resonator for wireless power transmission using a parallel-sheet.

FIG. 7 is a diagram illustrating an example of a resonator for wireless power transmission using a distributed capacitor.

FIG. 8 are diagrams illustrating an example of a matcher used by a 2D resonator and an example of a matcher used by a 3D resonator.

FIG. 9 is a diagram illustrating an example of an equivalent circuit of a transmission line to which the capacitor of FIG. 2 is inserted.

FIG. 10 is a diagram illustrating an example of an equivalent circuit of a composite right-left handed transmission line having a zeroth-order resonance characteristic.

FIG. 11 is a graph illustrating a zeroth-order resonance generated from a composite right-left handed transmission line.

FIG. 12 is a table illustrating an example of characteristics of a resonator for wireless power transmission.

FIGS. 13 through 15 are diagrams illustrating examples of a resonator for wireless power transmission.

FIG. 16 is a block diagram illustrating an example of a wireless power transmitter that is applicable to a source of FIG. 1.

FIG. 17 is a block diagram illustrating an example of a wireless power receiver that is applicable to a destination of FIG. 1.

Best Mode for Carrying Out the Invention

The following detailed description is provided in order to explain the example embodiments by referring to the figures.

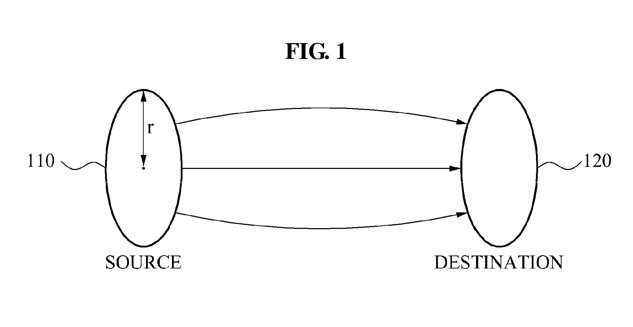

FIG. 1 illustrates an example of a wireless power transmission system including resonators for wireless power transmission.

The wireless power transmission system using a resonance characteristic of FIG. 1 may include a source 110 and a destination 120. Here, the source 110 may wirelessly provide power to the destination 120 using a resonator configured as a helix coil structure or a resonator configured as a spiral coil structure.

Here, physical sizes of the resonator configured as the helix coil structure or the resonator configured as the spiral coil structure may be dependent upon a desired resonant frequency. For example, when the desired resonant frequency is 10 megahertz (Mhz), a diameter of the resonator configured as the helix coil structure may be determined to be about 0.6 meters (m), and a diameter of the resonator configured as the spiral coil structure may be determined to be about 0.6 m. In this example, as a desired resonant frequency decreases the diameter of the resonator configured as the helix coil structure and the diameter of the resonator configured as the spiral coil structure may need to be increased.

The change occurs in a physical size of a resonator due to a change in a resonant frequency is not exemplary. As an extreme example, when a resonant frequency is significantly low, a size of the resonator may be remarkably large, which may not be practical. When the resonant frequency is independent of the size of the resonant, the resonator may be exemplary. Also, a resonator that has a rational physical size and operates well irrespective of a high resonant frequency and a low resonant frequency may be an exemplary resonator.

Hereinafter, related terms will be described for concise understanding although the terms are well known. All the materials may have a unique magnetic permeability, that is, Mu, and a unique permittivity, that is, epsilon. The magnetic permeability indicates a ratio between a magnetic flux density occurring with respect to a given magnetic field in a corresponding material and a magnetic flux density occurring with respect to the given magnetic field in a vacuum state. The permittivity indicates a ratio between an electric flux density occurring with respect to a given electric field in a corresponding material and an electric flux density occurring with respect to the given electric field in a vacuum state. The magnetic permeability and the permittivity may determine a propagation constant of a corresponding material in a given frequency or a given wavelength. An electromagnetic characteristic of the corresponding material may be determined based on the magnetic permeability and the permittivity. In particular, a material having a magnetic permeability or a permittivity not found in nature and being artificially designed is referred to as a metamaterial. The metamaterial may be easily disposed in a resonance state even in a relatively large wavelength area or a relatively low frequency area. For example, even though a material size rarely varies, the metamaterial may be easily disposed in the resonance state.

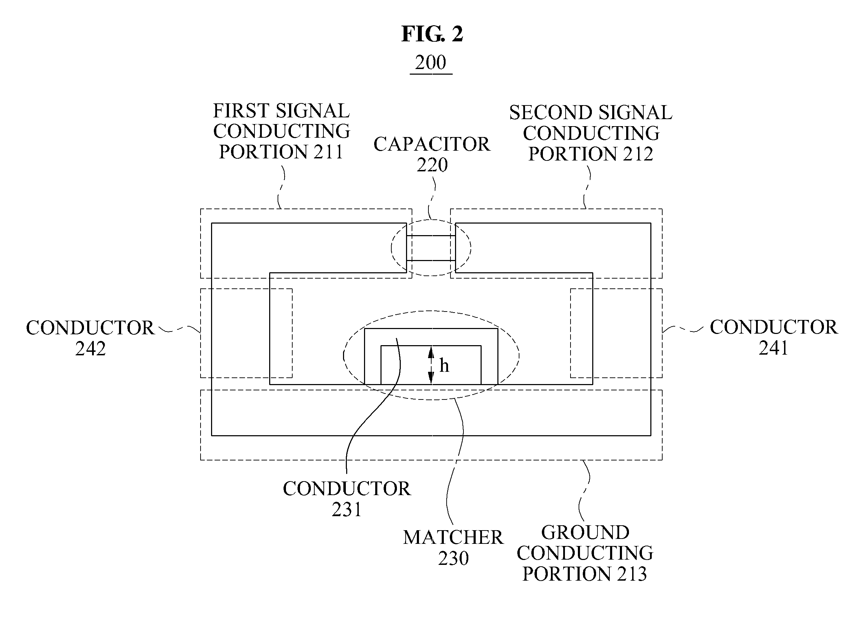

FIG. 2 illustrates an example of a resonator having a 2D structure.

Referring to FIG. 2, the resonator having the 2D structure includes a transmission line, a capacitor 220, a matcher 220, and conductors 241 and 242. The transmission line includes a first signal conducting portion 211, a second signal conducting portion 212, and a ground conducting portion 213.

The capacitor 220 may be inserted in series between the first signal conducting portion 211 and the second signal conducting portion 212, whereby an electric field may be confined within the capacitor 220. Generally, the transmission line may include at least one conductor in an upper portion of the transmission line, and may also include at least one conductor in a lower portion of the transmission line. A current may flow through the at least one conductor disposed in the upper portion of the transmission line and the at least one conductor disposed in the lower portion of the transmission may be electrically grounded. Herein, a conductor disposed in an upper portion of the transmission line may be separated into and thereby be referred to as the first signal conducting portion 211 and the second signal conducting portion 212. A conductor disposed in the lower portion of the transmission line may be referred to as the ground conducting portion 213.

As shown in FIG. 2, the resonator 200 may have the 2D structure. The transmission line may include the first signal conducting portion 211 and the second signal conducting portion 212 in the upper portion of the transmission line, and may include the ground conducting portion 213 in the lower portion of the transmission line. The first signal conducting portion 211 and the second signal conducting portion 212 may be disposed to face the ground conducting portion 213. The current may flow through the first signal conducting portion 211 and the second signal conducting portion 212.

One end of the first signal conducting portion 211 may be shorted to a conductor 242, and another end of the first signal conducting portion 211 may be connected to the capacitor 220. One end of the second signal conducting portion 212 may be shorted to the conductor 241, and another end of the second signal conducting portion 212 may be connected to the capacitor 220. Accordingly, the first signal conducting portion 211, the second signal conducting portion 212, the ground conducting portion 213, and the conductors 241 and 242 may be connected to each other, whereby the resonator 200 may have an electrically closed-loop structure. The term "loop structure" may include a polygonal structure, for example, a circular structure, a rectangular structure, and the like. "Having a loop structure" may indicate being electrically closed.

The capacitor 220 may be inserted into an intermediate portion of the transmission line. Specifically, the capacitor 220 may be inserted into a space between the first signal conducting portion 211 and the second signal conducting portion 212. The capacitor 220 may have a shape of a lumped element, a distributed element, and the like. In particular, a distributed capacitor having the shape of the distributed element may include zigzagged conductor lines and a dielectric material having a relatively high permittivity between the zigzagged conductor lines.

When the capacitor 220 is inserted into the transmission line, the resonator 200 may have a property of a metamaterial. The metamaterial indicates a material having a predetermined electrical property that cannot be discovered in nature and thus, may have an artificially designed structure. An electromagnetic characteristic of all the materials existing in nature may have a unique magnetic permeability or a unique permittivity. Most materials may have a positive magnetic permeability or a positive permittivity. In the case of most materials, a right hand rule may be applied to an electric field, a magnetic field, and a pointing vector and thus, the corresponding materials may be referred to as right handed materials (RHMs). However, the metamaterial has a magnetic permeability or a permittivity absent in nature and thus, may be classified into an epsilon negative (ENG) material, a mu negative (MNG) material, a double negative (DNG) material, a negative refractive index (NRI) material, a left-handed (LH) material, and the like, based on a sign of the corresponding permittivity or magnetic permeability.

When a capacitance of the capacitor inserted as the lumped element is appropriately determined, the resonator 200 may have the characteristic of the metamaterial. Since the resonator 200 may have a negative magnetic permeability by appropriately adjusting the capacitance of the capacitor 220, the resonator 200 may also be referred to as an MNG resonator. Various criteria may be applied to determine the capacitance of the capacitor 220. For example, the various criteria may include a criterion for enabling the resonator 200 to have the characteristic of the metamaterial, a criterion for enabling the resonator 200 to have a negative magnetic permeability in a target frequency, a criterion for enabling the resonator 200 to have a zeroth-order resonance characteristic in the target frequency, and the like. Based on at least one criterion among the aforementioned criteria, the capacitance of the capacitor 220 may be determined.

The resonator 200, also referred to as the MNG resonator 200, may have a zeroth-order resonance characteristic of having, as a resonance frequency, a frequency when a propagation constant is "0". Since the resonator 200 may have the zeroth-order resonance characteristic, the resonance frequency may be independent with respect to a physical size of the MNG resonator 200. By appropriately designing the capacitor 220, the MNG resonator 200 may sufficiently change the resonance frequency. Accordingly, the physical size of the MNG resonator 200 may not be changed.

In a near field, the electric field may be concentrated on the capacitor 220 inserted into the transmission line. Accordingly, due to the capacitor 220, the magnetic field may become dominant in the near field. The MNG resonator 200 may have a relatively high Q-factor using the capacitor 220 of the lumped element and thus, it is possible to enhance an efficiency of power transmission. Here, the Q-factor indicates a level of an ohmic loss or a ratio of a reactance with respect to a resistance in the wireless power transmission. It can be understood that the efficiency of the wireless power transmission may increase according to an increase in the Q-factor.

The MNG resonator 200 may include the matcher 220 for impedance-matching. The matcher 220 may appropriately adjust a strength of a magnetic field of the MNG resonator 200. An impedance of the MNG resonator 200 may be determined by the matcher 220. A current may flow in the MNG resonator 200 via a connector, or may flow out from the MNG resonator 200 via the connector. The connector may be connected to the ground conducting portion 213 or the matcher 220. A physical connection may be formed between the connector and the ground conducting portion 213, or between the connector and the matcher 220. The power may be transferred through coupling without using a physical connection between the connector and the ground conducting portion 213 or the matcher 220.

More specifically, as shown in FIG. 2, the matcher 220 may be positioned within the loop formed by the loop structure of the resonator 200. The matcher 220 may adjust the impedance of the resonator 200 by changing the physical shape of the matcher 220. For example, the matcher 220 includes a conductor 231 for the impedance-matching in a location separate from the ground conducting portion 213 by a distance h. The impedance of the resonator 200 may be changed by adjusting the distance h.

Although not illustrated in FIG. 2, a controller may be provided to control the matcher 220. In this case, the matcher 220 may change the physical shape of the matcher 220 based on a control signal generated by the controller. For example, the distance h between a conductor 231 of the matcher 220 and the ground conducting portion 213 may increase or decrease based on the control signal. Accordingly, the physical shape of the matcher 220 may be changed whereby the impedance of the resonator 200 may be adjusted. The controller may generate the control signal based on varied factors, which will be described later.

As shown in FIG. 2, the matcher 220 may be configured as a passive element such as the conductor 231. Depending on embodiments, the matcher 220 may be configured as an active element such as a diode, a transistor, and the like. When the active element is included in the matcher 220, the active element may be driven based on the control signal generated by the controller, and the impedance of the resonator 200 may be adjusted based on the control signal. For example, a diode that is a type of the active element may be included in the matcher 220. The impedance of the resonator 200 may be adjusted depending on whether the diode is in an on state or in an off state.

Although not illustrated in FIG. 2, a magnetic core may be further provided to pass through the MNG resonator 200. The magnetic core may perform a function of increasing a power transmission distance.

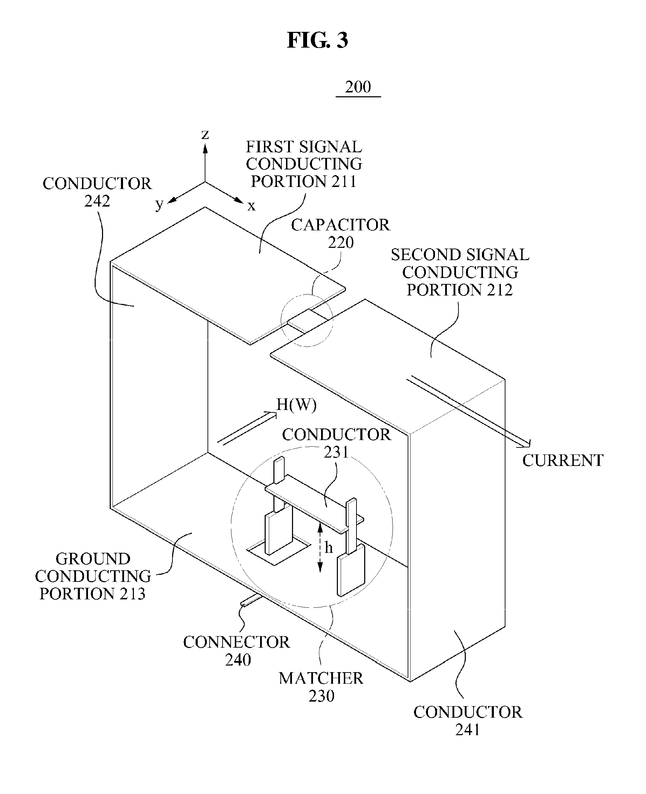

FIG. 3 illustrates an example of a resonator having a 3D structure according to example embodiments.

Referring to FIG. 3, the resonator 200 having a 3D structure includes a transmission line and the capacitor 220. The transmission line includes the first signal conducting portion 211, the second signal conducting portion 212,

and the ground conducting portion 213. The capacitor 220 may be inserted in series between the first signal conducting portion 211 and the second signal conducting portion 212 of the transmission line, whereby an electric field may be confined within the capacitor 220.

As shown in FIG. 3, the resonator 200 may have the 3D structure. The transmission line includes the first signal conducting portion 211 and the second signal conducting portion 212 in an upper portion of the resonator 200, and includes the ground conducting portion 213 in a lower portion of the resonator 200. The first signal conducting portion 211 and the second signal conducting portion 212 may be disposed to face the ground conducting portion 213. A current may flow in an x direction through the first signal conducting portion 211 and the second signal conducting portion 212. Due to the current, a magnetic field H(W) may be formed in a -y direction. Alternatively, unlike the diagram of FIG. 3, the magnetic field H(W) may be formed in a +y direction.

One end of the first signal conducting portion 211 may be shorted to the conductor 242, and another end of the first signal conducting portion 211 may be connected to the capacitor 220. One end of the second signal conducting portion 212 may be shorted to the conductor 241, and another end of the second signal conducting portion 212 may be connected to the capacitor 220. Accordingly, the first signal conducting portion 211, the second signal conducting portion 212, the ground conducting portion 213, and the conductors 241 and 242 may be connected to each other, whereby the resonator 200 may have an electrically closed-loop structure. The term "loop structure" may include a polygonal structure, for example, a circular structure, a rectangular structure, and the like. "Having a loop structure" may indicate being electrically closed.

As shown in FIG. 3, the capacitor 220 may be inserted into a space between the first signal conducting portion 211 and the second signal conducting portion 212. The capacitor 220 may have a shape of a lumped element, a distributed element, and the like. In particular, a distributed capacitor having the shape of the distributed element may include zigzagged conductor lines and a dielectric material having a relatively high permittivity between the zigzagged conductor lines.

As the capacitor 220 is inserted into the transmission line, the resonator 200 may have a property of a metamaterial. When a capacitance of the capacitor inserted as the lumped element is appropriately determined, the resonator 200 may have the characteristic of the metamaterial. Since the resonator 200 may have a negative magnetic permeability in a predetermined frequency band by appropriately adjusting the capacitance of the capacitor 220, the resonator 200 may also be referred to as an MNG resonator. Various criteria may be applied to determine the capacitance of the capacitor 220. For example, the various criteria may include a criterion for enabling the resonator 200 to have the characteristic of the metamaterial, a criterion for enabling the resonator 200 to have a negative magnetic permeability in a target frequency, a criterion for enabling the resonator 200 to have a zeroth-order resonance characteristic in the target frequency, and the like. Based on at least one criterion among the aforementioned criteria, the capacitance of the capacitor 220 may be determined.

The resonator 200, also referred to as the MNG resonator 200, may have a zeroth-order resonance characteristic of having, as a resonance frequency, a frequency when a propagation constant is "0". Since the resonator 200 may have the zeroth-order resonance characteristic, the resonance frequency may be independent with respect to a physical size of the MNG resonator 200. By appropriately designing the capacitor 220, the MNG resonator 200 may sufficiently change the resonance frequency. Accordingly, the physical size of the MNG resonator 200 may not be changed.

Referring to the MNG resonator 200 of FIG. 3, in a near field, the electric field may be concentrated on the capacitor 220 inserted into the transmission line. Accordingly, due to the capacitor 220, the magnetic field may become dominant in the near field. In particular, since the MNG resonator 200 having the zeroth-order resonance characteristic may have characteristics similar to a magnetic dipole, the magnetic field may become dominant in the near field. A relatively small amount of the electric field formed due to the insertion of the capacitor 220 may be concentrated on the capacitor 220 and thus, the magnetic field may become further dominant. The MNG resonator 200 may have a relatively high Q-factor using the capacitor 220 of the lumped element and thus, it is possible to enhance an efficiency of power transmission.

Also, the MNG resonator 200 includes a matcher 230 for impedance-matching. The matcher 230 may appropriately adjust the strength of magnetic field of the MNG resonator 200. An impedance of the MNG resonator 200 may be determined by the matcher 230. A current may flow in the MNG resonator 200 via a connector 240, or may flow out from the MNG resonator 200 via the connector 240. The connector 240 may be connected to the ground conducting portion 213 or the matcher 230.

More specifically, as shown in FIG. 3, the matcher 230 may be positioned within the loop formed by the loop structure of the resonator 200. The matcher 230 may adjust the impedance of the resonator 200 by changing the physical shape of the matcher 230. For example, the matcher 230 includes the conductor 231 for the impedance-matching in a location separate from the ground conducting portion 213 by a distance h. The impedance of the resonator 200 may be changed by adjusting the distance h.

Although not illustrated in FIG. 3, a controller may be provided to control the matcher 230. In this case, the matcher 230 may change the physical shape of the matcher 230 based on a control signal generated by the controller.

For example, the distance h between the conductor 231 of the matcher 230 and the ground conducting portion 213 may increase or decrease based on the control signal. Accordingly, the physical shape of the matcher 230 may be changed whereby the impedance of the resonator 200 may be adjusted. The distance h between the conductor 231 of the matcher 230 and the ground conducting portion 213 may be adjusted using a variety of schemes. As one example, a plurality of conductors may be included in the matcher 230 and the distance h may be adjusted by adaptively activating one of the conductors. As another example, the distance h may be adjusted by adjusting the physical location of the conductor 231 up and down. The distance h may be controlled based on the control signal of the controller. The controller may generate the control signal using various factors. An example of the controller generating the control signal will be described later.

As shown in FIG. 3, the matcher 230 may be configured as a passive element such as the conductor 231. Depending on embodiments, the matcher 230 may be configured as an active element such as a diode, a transistor, and the like. When the active element is included in the matcher 230, the active element may be driven based on the control signal generated by the controller, and the impedance of the resonator 200 may be adjusted based on the control signal. For example, a diode that is a type of the active element may be included in the matcher 230. The impedance of the resonator 200 may be adjusted depending on whether the diode is in an on state or in an off state.

Although not illustrated in FIG. 3, a magnetic core may be further provided to pass through the resonator 200 configured as the MNG resonator. The magnetic core may perform a function of increasing a power transmission distance.

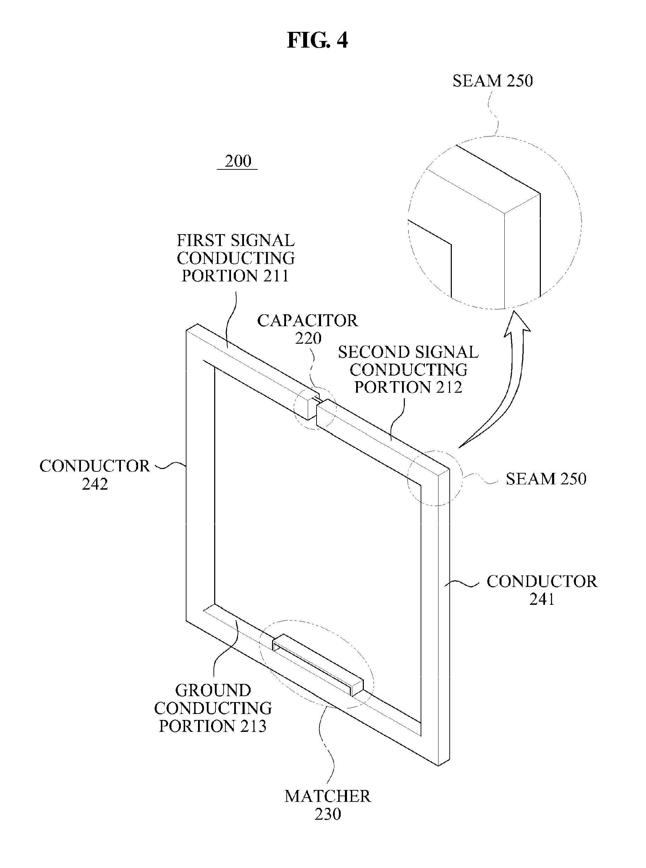

FIG. 4 illustrates an example of a resonator for a wireless power transmission configured as a bulky type according to example embodiments.

Referring to FIG. 4, the first signal conducting portion 211 and the conductor 242 may be integrally formed instead of being separately manufactured and thereby be connected to each other. Similarly, the second signal conducting portion 212 and a conductor 241 may also be integrally manufactured.

When the second signal conducting portion 212 and the conductor 241 are separately manufactured and then are connected to each other, a loss of conduction may occur due to a seam 250. Accordingly, the second signal conducting portion 212 and the conductor 241 may be connected to each other without using a separate seam, that is, may be seamlessly connected to each other. Accordingly, it is possible to decrease a conductor loss caused by the seam 250. As another example, the second signal conducting portion 212 and the ground conducting portion 213 may be seamlessly and integrally manufactured. As another example, the first signal conducting portion 211 and the ground conducting portion 213 may be seamlessly and integrally manufactured. As another example, the first signal conducting portion 211 and the conductor 242 may be seamlessly manufactured. As another example, the conductor 242 and the ground conducting portion 213 may be seamlessly manufactured.

Referring to FIG. 4, a type of a seamless connection connecting at least two partitions into an integrated form is referred to as a bulky type.

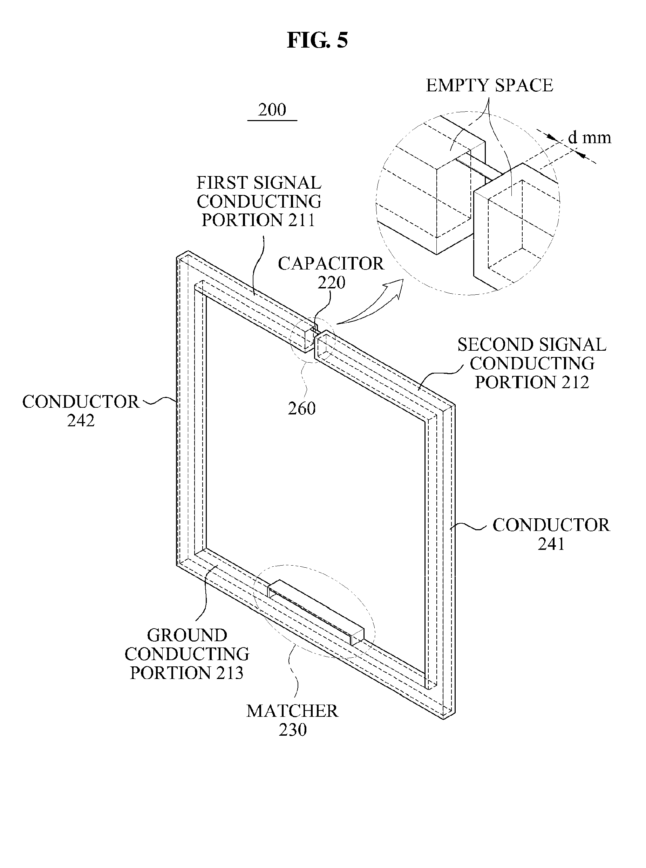

FIG. 5 illustrates an example of a resonator for a wireless power transmission, configured as a hollow type according to example embodiments.

Referring to FIG. 5, each of the first signal conducting portion 211, the second signal conducting portion 212, the ground conducting portion 213, and conductors 241 and 242 of the resonator 200 configured as the hollow type includes an empty space inside.

In a given resonance frequency, an active current may be modeled to flow in only a portion of the first signal conducting portion 211 instead of all of the first signal conducting portion 211, the second signal conducting portion 212 instead of all of the second signal conducting portion 212, the ground conducting portion 213 instead of all of the ground conducting portion 213, and the conductors 241 and 242 instead of all of the conductors 241 and 242. Specifically, when a depth of each of the first signal conducting portion 211, the second signal conducting portion 212, the ground conducting portion 213, and the conductors 241 and 242 is significantly deeper than a corresponding skin depth in the given resonance frequency, it may be ineffective. The significantly deeper depth may increase a weight or manufacturing costs of the resonator 200.

Accordingly, in the given resonance frequency, the depth of each of the first signal conducting portion 211, the second signal conducting portion 212, the ground conducting portion 213, and the conductors 241 and 242 may be appropriately determined based on the corresponding skin depth of each of the first signal conducting portion 211, the second signal conducting portion 212, the ground conducting portion 213, and the conductors 241 and 242. When each of the first signal conducting portion 211, the second signal conducting portion 212, the ground conducting portion 213, and the conductors 241 and 242 has an appropriate depth deeper than a corresponding skin depth, the resonator 200 may become light, and manufacturing costs of the resonator 200 may also decrease.

For example, as shown in FIG. 5, the depth of the second signal conducting portion 212 may be determined as "d" mm and d may be determined according to $d = \dfrac{1}{\sqrt{\pi f \mu \sigma}}$ Here, $f$ denotes a frequency,

$\mu$ denotes a magnetic permeability, and $\sigma$ denotes a conductor constant. When the first signal conducting portion 211, the second signal conducting portion 212, the ground conducting portion 213, and the conductors 241 and 242 are made of a copper and have a conductivity of $5.8 \times 10^7$ siemens per meter (S·m$^{-1}$), the skin depth may be about 0.6 mm with respect to 10 kHz of the resonance frequency and the skin depth may be about 0.006 mm with respect to 100 MHz of the resonance frequency.

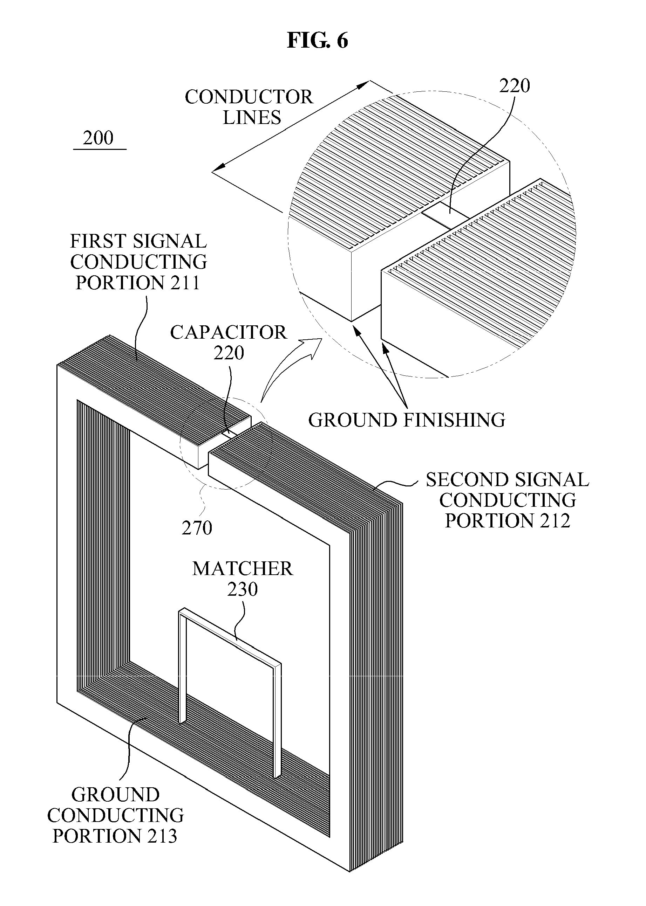

FIG. 6 illustrates an example of a resonator for a wireless power transmission using a parallel-sheet according to example embodiments.

Referring to FIG. 6, the parallel-sheet may be applicable to each of the first signal conducting portion 211 and the second signal conducting portion 212 included in the resonator 200.

Each of the first signal conducting portion 211 and the second signal conducting portion 212 may not be a perfect conductor and thus, may have a resistance. Due to the resistance, an ohmic loss may occur. The ohmic loss may decrease a Q-factor and also decrease a coupling effect.

By applying the parallel-sheet to each of the first signal conducting portion 211 and the second signal conducting portion 212, it is possible to decrease the ohmic loss, and to increase the Q-factor and the coupling effect. Referring to a portion 270 indicated by a circle, when the parallel-sheet is applied, each of the first signal conducting portion 211 and the second signal conducting portion 212 includes a plurality of conductor lines. The plurality of conductor lines may be disposed in parallel, and may be shorted at an end portion of each of the first signal conducting portion 211 and the second signal conducting portion 212.

As described above, when the parallel-sheet is applied to each of the first signal conducting portion 211 and the second signal conducting portion 212, the plurality of conductor lines may be disposed in parallel. Accordingly, a sum of resistances having the conductor lines may decrease. Consequently, the resistance loss may decrease, and the Q-factor and the coupling effect may increase.

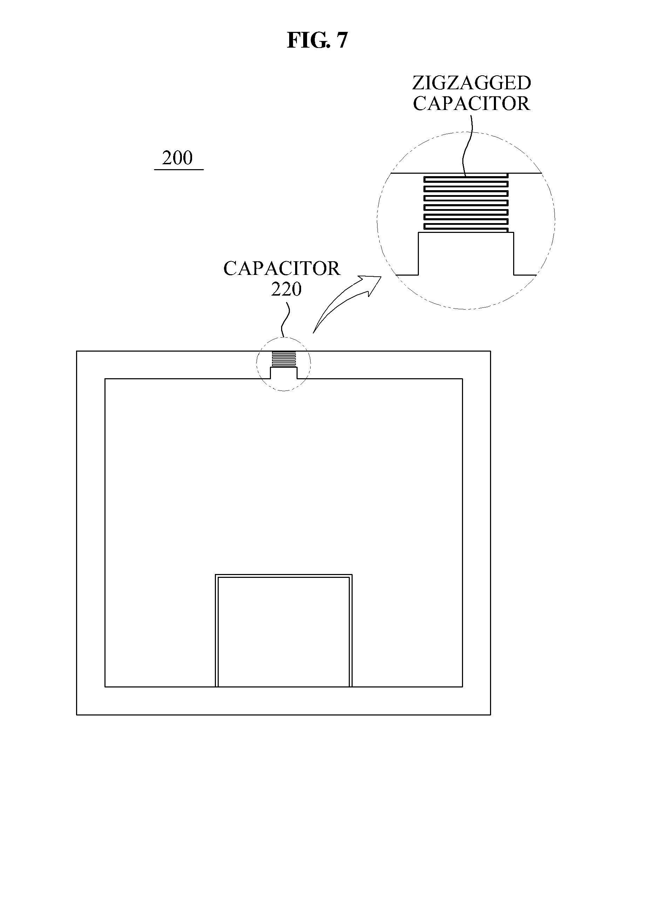

FIG. 7 illustrates an example of a resonator for a wireless power transmission, including a distributed capacitor according to example embodiments.

Referring to FIG. 7, the capacitor 220 included in the resonator for the wireless power transmission may be a distributed capacitor. A capacitor as a lumped element may have a relatively high equivalent series resistance (ESR). A variety of schemes have been proposed to decrease the ESR contained in the capacitor of the lumped element. According to an embodiment, by using the capacitor 220 as a distributed element, it is possible to decrease the ESR. As is known in the art, a loss caused by the ESR may decrease a Q-factor and a coupling effect.

As shown in FIG. 7, the capacitor 220 as the distributed element may have a zigzagged structure. For example, the capacitor 220 as the distributed element may be configured as a conductive line and a conductor having the zigzagged structure.

As shown in FIG. 7, by employing the capacitor 220 as the distributed element, it is possible to decrease the loss occurring due to the ESR. In addition, by disposing a plurality of capacitors as lumped elements, it is possible to decrease the loss occurring due to the ESR. Since a resistance of each of the capacitors as the lumped elements decreases through a parallel connection, active resistances of parallel-connected capacitors as the lumped elements may also decrease whereby the loss occurring due to the ESR may decrease. For example, by employing ten capacitors of 1 pF instead of using a single capacitor of 10 pF, it is possible to decrease the loss occurring due to the ESR.

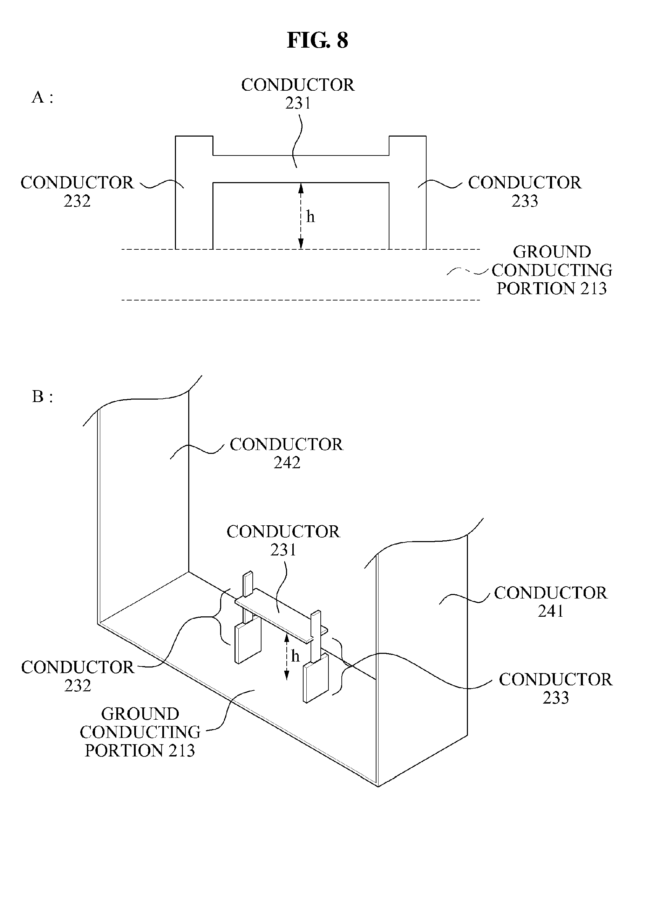

FIG. 8 illustrates an example of a matcher used in a resonator provided in a 2D structure, an example of a matcher used in a resonator provided in a 3D structure.

Here, a diagram A in FIG. 8 illustrates a portion of the 2D resonator of FIG. 2 including the matcher, and a diagram B in FIG. 8 illustrates a portion of the 3D resonator of FIG. 3 including the matcher.

Referring to the diagram A in FIG. 8, the matcher includes the conductor 231, a conductor 232, and a conductor 233. The conductors 232 and 233 may be connected to the ground conducting portion 213 and the conductor 231. The impedance of the 2D resonator may be determined based on a distance h between the conductor 231 and the ground conducting portion 213. The distance h between the conductor 231 and the ground conducting portion 213 may be controlled by the controller. The distance h between the conductor 231 and the ground conducting portion 213 may be adjusted using a variety of schemes. For example, the variety of schemes may include a scheme of adjusting the distance h by adaptively activating one of conductors, for example, the conductor 231, a scheme of adjusting the physical location of the conductor 231 up and down, and the like.

Referring to the diagram B in FIG. 8, the matcher includes the conductor 231, a conductor 232, and a conductor 233. The conductors 232 and 233 may be connected to the ground conducting portion 213 and the conductor 231. The impedance of the 3D resonator may be determined based on a distance h between the conductor 231 and the ground conducting portion 213. The distance h between the conductor 231 and the ground conducting portion 213 may be controlled by the controller. Similar to the matcher included in the 2D structured resonator, in the matcher 230 included in the 3D structured resonator, the distance h between the conductor 231 and the ground conducting portion 213 may be adjusted using a variety of schemes. For example, the variety of schemes may include a scheme of adjusting the distance h by adaptively activating one of conductors, for example, the conductor 231, a scheme of adjusting the physical location of the conductor 231 up and down, and the like.

Although not illustrated in FIG. 8, the matcher may include an active element. A scheme of adjusting an impedance of a resonator using the active element may be similar as described above. For example, the impedance of the resonator may be adjusted by changing a path of a current flowing through the matcher using the active element.

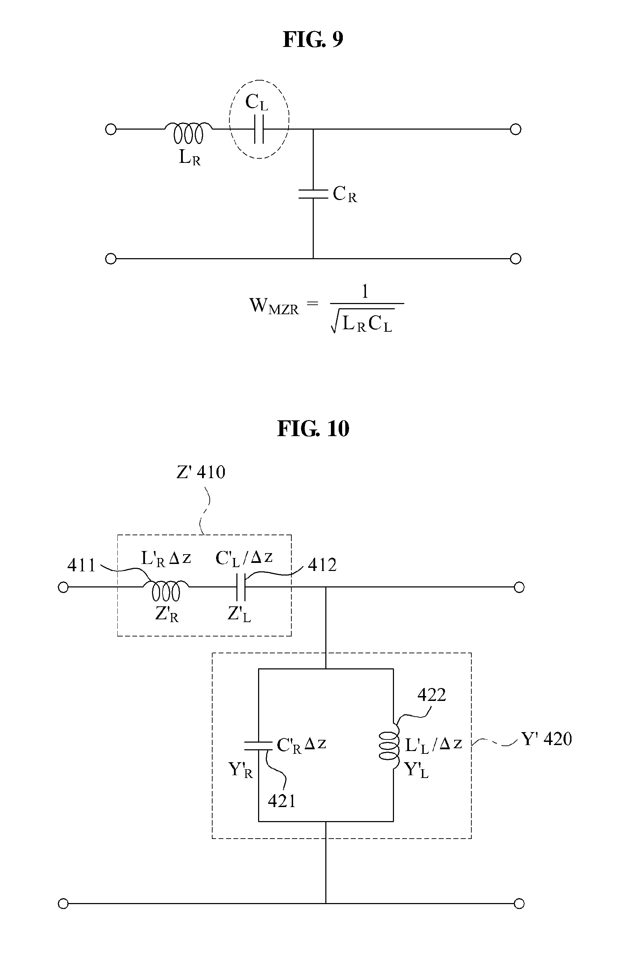

FIG. 9 illustrates an example of an equivalent circuit of a transmission line to which the capacitor of FIG. 2 is inserted.

The transmission line to which the capacitor of FIG. 2 is inserted may be modeled to be an equivalent circuit of FIG. 9. In the equivalent circuit of FIG. 9, $C_L$ denotes the capacitor inserted, in a form of lumped elements, into a middle portion of the transmission line of FIG. 2.

In this example, the transmission line to which the capacitor of FIG. 2 is inserted may have a zeroth-order resonance characteristic. That is, when a propagation constant is '0', a resonator for wireless power transmission may have a resonant frequency of $\omega_{MZR}$. In this example, $\omega_{MZR}$ may be expressed by Equation 1. Here, MZR may denote a Mu zero resonator.

[Equation 1]

$$\omega_{MZR} = \frac{1}{\sqrt{L_R C_L}}$$

Referring to Equation 1, $\omega_{MZR}$, that is, the resonant frequency of the resonator, may be determined based on $\frac{L_R}{C_L}$, and $\omega_{MZR}$ may be independent of a physical size of the resonator. Accordingly, the physical size of the resonator is independent of $\omega_{MZR}$ and thus, the physical size of the resonator may be sufficiently reduced.

FIG. 10 illustrates an example of an equivalent circuit of a composite right-left handed transmission line having a zeroth-order resonance characteristic. Although the resonator for wireless power transmission is based on an MNG transmission line, the MNG transmission line will be described using the composite right-left handed transmission line.

Referring to FIG. 10, an equivalent circuit of the composite right-left handed transmission line may include a basic transmission line, and may additionally include $\frac{C_L'}{\Delta z}$ 412 that is a series-capacitor, and $\frac{L_L'}{\Delta z}$ 422 that is shunt-inductor. Here, $\frac{L_R'}{\Delta z}$ 411 and $\frac{C_R'}{\Delta z}$ 421 may denote an inductor component and a capacitor component of the basic transmission line, respectively.

In this example, impedance Z' 410 may be a sum of a component corresponding to $\frac{L_R'}{\Delta z}$ 411 and a component corresponding to $\frac{C_L'}{\Delta z}$ 412, and admittance Y' 420 may be a sum of a component corresponding

to $C_R^{'} \Big/ \Delta z$ 421 and a component corresponding to $L_L^{'} \Big/ \Delta z$ 422.

Accordingly, impedance Z' 410 and admittance Y 420 may be expressed by Equation 2.

[Equation 2]

$$Z' = j\left( \omega L_R^{'} - \frac{1}{\omega C_L^{'}} \right)$$

$$Y' = j\left( \omega C_R^{'} - \frac{1}{\omega L_L^{'}} \right)$$

Referring to Equation 2, a resonant frequency, at which an amplitude of impedance Z 410 or admittance Y' 420 is minimized, may be adjusted by appropriately adding $C_L^{'} \Big/ \Delta z$ 412 and $L_L^{'} \Big/ \Delta z$ 422 to the transmission line. Also, the composite right-left handed transmission line has a zeroth-order resonance characteristic. That is, a resonant frequency of the composite right-left handed transmission line may be a frequency when a propagation constant is '0'.

When only $C_L^{'} \Big/ \Delta z$ 412 is added to the basic transmission line, the transmission line may have a negative value of mu in a predetermined frequency band and thus, may be referred to as an MNG transmission line.

Also, when only $L_L^{'} \Big/ \Delta z$ 422 is added to the basic transmission line, the transmission line may have a negative permeability and thus, may be referred to as an ENG transmission line. The MNG transmission line and the ENG transmission line may also have a zeroth-order resonance characteristic.

A MNG resonator according to example embodiments may include $C_L^{'} \Big/ \Delta z$ 412 so that a magnetic field is dominant in a near field. That is, an electric field is concentrated on $C_L^{'} \Big/ \Delta z$ 412 in the near field and thus, the magnetic field may be dominant in the near field.

Also, the MNG resonator may have a zeroth-order resonance characteristic in the same manner as the composite right-left handed transmission line and thus, the MNG resonator may be manufactured to be small, irrespective of the resonant frequency.

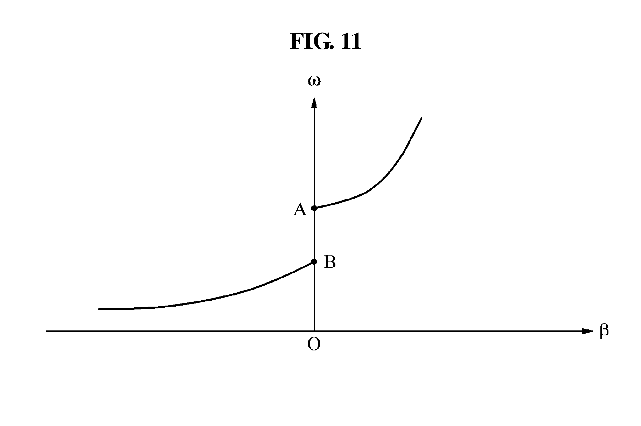

FIG. 11 is a graph illustrating a zeroth-order resonance generated from a composite right-left handed transmission line.

Referring to FIG. 11, the composite right-left handed transmission line may have a resonant frequency of A and a resonant frequency of B. In this example, a propagation constant (β) corresponding to A and B is '0' and thus, the composite right-left handed transmission line may have the zeroth-order resonance characteristic.

Similar to the composite right-left handed transmission line, an MNG transmission line and an ENG transmission line may also have the zeroth-order resonance characteristic. For example, a resonant frequency of the MNG transmission line may be A, and a resonant frequency of the ENG transmission line may be B. Accordingly, the MNG resonator may be manufactured to have a sufficiently small size.

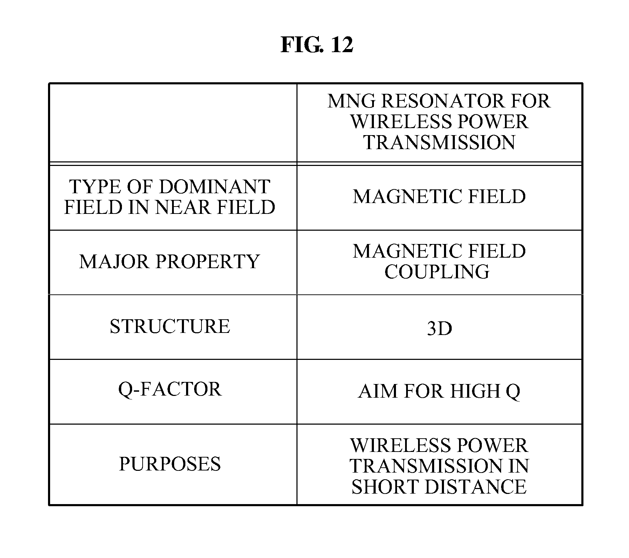

FIG. 12 is a table illustrating characteristics of a resonator for wireless power transmission.

Referring to FIG. 12, a magnetic field is more dominant than an electric field in a near field of an MNG resonator. Also, the MNG resonator may improve a power transmission efficiency through a magnetic field coupling.

The MNG resonator may be manufactured in a 3D structure, and may aim for a high Q factor. The MNG resonator may be used for wireless power transmission in a short distance.

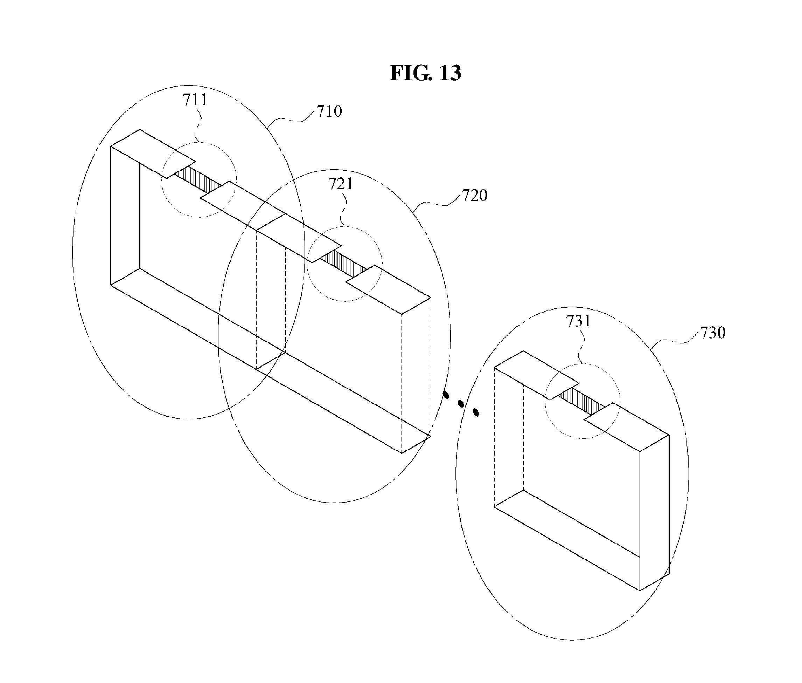

FIGS. 13 through 15 illustrate examples of a resonator for wireless power transmission.

Referring to FIG. 13, the resonator for wireless power transmission may include a plurality of transmission lines 710, 720, and 730 which are connected in series. In this example, a plurality of capacitors 711, 721, 731 may be inserted into the plurality of transmission lines 710, 720, and 730, respectively. A coupling efficiency may be improved through use of the resonator of FIG. 13, and a plurality of resonant frequencies may be obtained through the plurality of transmission lines 710, 720, and 730. In particular, wireless power may be transmitted and received simultaneously in at least two frequency bands using the resonator of FIG. 13.

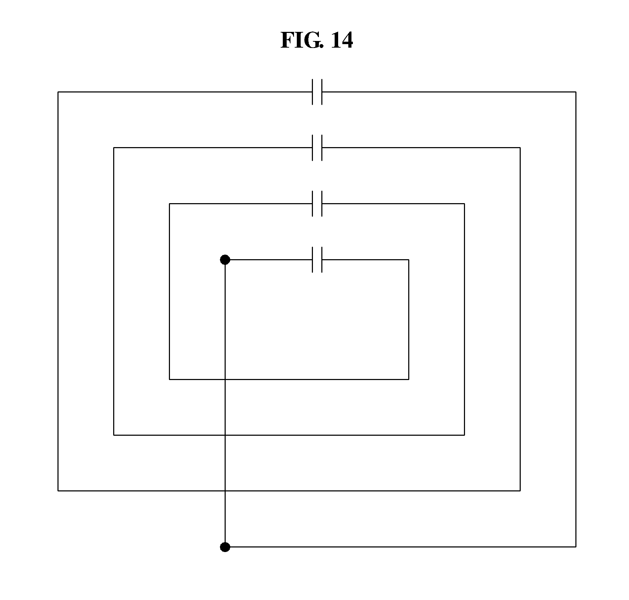

Referring to FIG. 14, the resonator for wireless power transmission may have a spiral structure. That is, a plurality of transmission lines may be connected to each other so as to be configured as the spiral structure, and a plurality of capacitors may be inserted into the plurality of transmission lines, respectively. The resonator of FIG. 14 may form a magnetic field having a high intensity within a limited space or area. In addition, a high Q factor may be obtained by increasing an effective inductance of resonance.

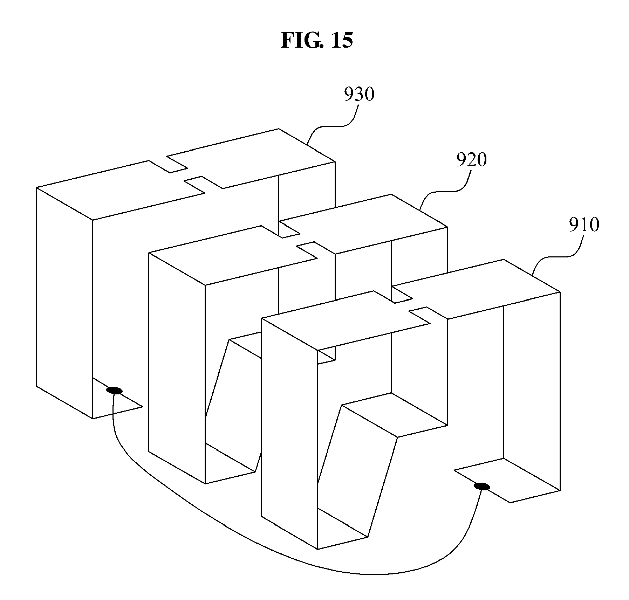

Referring to FIG. 15, the resonator for wireless power transmission may include a plurality of transmission lines 910, 920, and 930 which are connected to each other in parallel. The resonator of FIG. 15 may form a magnetic field having a high intensity at a predetermined resonant frequency.

In addition to examples of FIGS. 13 through 15, the resonator may be manufactured in various shapes.

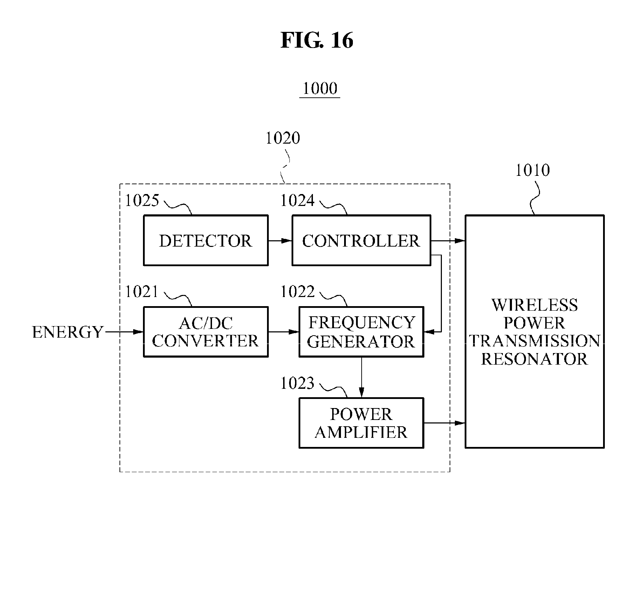

FIG. 16 illustrates a configuration of a wireless power transmitter that is applicable to a source of FIG. 1.

Referring to FIG. 16, a wireless power transmitter 1000 may include a resonator 1010 and a pre-processor 1020.

A wireless power transmission resonator 1010 may be a resonator described with respect to FIGS. 1 through 15, and power may be wirelessly transmitted using a wave propagated by the wireless power transmission resonator 1010.

The pre-processor 1020 may generate a current and a frequency for wireless power transmission, using energy supplied from a power supplier existing inside or outside the wireless power transmitter 1000.

In particular, the pre-processor 1020 may include an alternating current/direct current (AC/DC) converter 1021, a frequency generator 1022, a power amplifier 1023, a controller 1024, and a detector 1025.

The AC/DC converter 1021 may convert AC energy supplied from the power supplier into DC energy or a DC current. In this example, the frequency generator 1022 may generate a desired frequency, that is, a desired resonant frequency, based on the DC energy or the DC current, and may generate a current having the desired frequency. The current having the desired frequency may be amplified by the power amplifier 1023.

The controller 1024 may generate a control signal to control an impedance of the wireless power transmission resonator 1010, and may adjust a frequency generated by the frequency generator 1022. For example, an optimal frequency, at which a power transmission gain, a coupling efficiency, and the like are maximized, may be selected from among frequency bands.

The detector 1025 may detect a distance between the wireless power transmission resonator 1010 and a wireless power reception resonator of a wireless power receiver, a reflection coefficient of a wave radiated from the wireless power transmission resonator 1010 to the wireless power reception resonator, a power transmission gain between the wireless power transmission resonator 1010 and the wireless power reception resonator, a coupling efficiency between the wireless power transmission resonator 1010 and the wireless power reception resonator, or the like.

In this example, the controller 1024 may generate a control signal that adjusts an impedance of the wireless power transmission resonator 1010 based on the distance, the reflection coefficient, the power transmission gain, the coupling efficiency, and the like, or that controls a frequency generated by the frequency generator 1022.

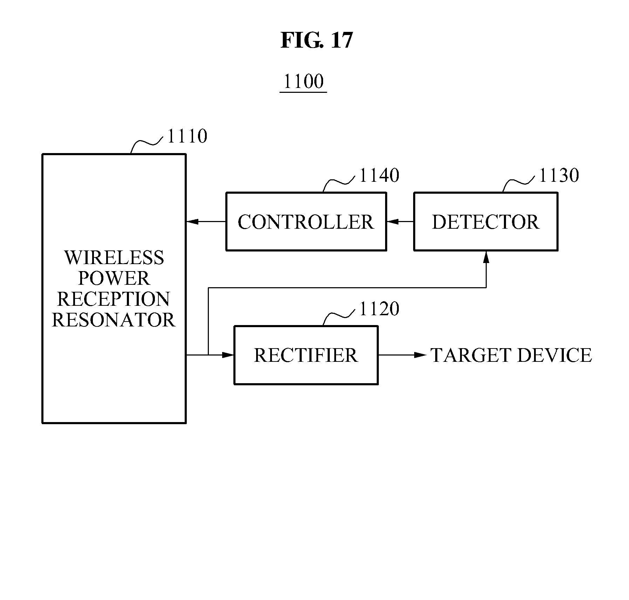

FIG. 17 illustrates a configuration of a wireless power receiver that is applicable to a destination of FIG. 1.

Referring to FIG. 17, a wireless power receiver 1100 may include a wireless power reception resonator 1110, a rectifier 1120, a detector 1130, and a controller 1140.

The wireless power reception resonator 1110 may be a resonator described with reference to FIGS. 1 through 15, and may receive a wave propagated by a wireless power transmitter.

The rectifier 1120 may convert power received by the wave into DC energy, and all or a portion of the DC energy may be provided to a target device. The target device may be a power storage device, for example, a battery, or may be a device utilizing power.

The detector 1130 may detect a distance between the wireless power transmission resonator and the wireless power reception resonator 1110 of the wireless power receiver 1100, a reflection coefficient of a wave radiated from the wireless power transmission resonator to the wireless power reception resonator 1100, a power transmission gain between the wireless power transmission resonator and the wireless power reception resonator 1100, a coupling efficiency between the wireless power transmission resonator and the wireless power reception resonator 1100, or the like.

The controller 1140 may generate a control signal to control an impedance of the wireless power reception resonator 1100 based on the distance between the wireless power transmission resonator and the wireless power reception resonator 1110 of the wireless power receiver 1100, the reflection coefficient of a wave radiated from the wireless power transmission resonator to the wireless power reception resonator 1100, the power transmission gain between the wireless power transmission resonator and the wireless power reception resonator 1100, the coupling efficiency between the wireless power transmission resonator and the wireless power reception resonator 1100, or the like.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

**Claims**

1. A wireless power resonator, comprising:

   a transmission line comprising a first signal conducting portion, a second signal conducting portion, and a ground conducting portion corresponding to the first signal conducting portion and the second signal conducting portion;
   a first conductor that electrically connects the first signal conducting portion and the ground conducting portion;
   a second conductor that electrically connects the second signal conducting portion and the ground conducting portion; and
   at least one capacitor inserted between the first signal conducting portion and the second signal conducting portion in series with respect to a current flowing through the first signal conducting portion and the second signal conducting portion.

2. The wireless power resonator of claim 1, wherein the transmission line, the first conductor, and the second conductor form a loop structure.

3. The wireless power resonator of claim 1, wherein the transmission line, the first conductor, and the second conductor form a loop structure provided in a rectangular shape.

4. The wireless power resonator of claim 3, further comprising:

   a matcher, disposed inside a loop formed by the transmission line, the first conductor, and the second conductor, to determine an impedance of the wireless power resonator.

5. The wireless power resonator of claim 4, wherein the matcher is provided in a rectangular shape.

6. The wireless power resonator of claim 4, wherein the matcher changes a physical size of the matcher so as to adjust the impedance of the wireless power resonator based on a control signal provided by a controller.

7. The wireless power resonator of claim 4, wherein the controller generates the control signal based on a state of an opposite resonator that receives power from the wireless power resonator or transmits power to the wireless power resonator.

8. The wireless power resonator of claim 4, wherein the controller generates the control signal based on at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

9. The wireless power resonator of claim 4, wherein:

the matcher is a conductor for impedance matching, which is located at a predetermined distance away from the ground conducting portion; and
the impedance of the wireless power resonator is adjusted based on a distance between the ground conducting portion and the conductor for the impedance matching.

10. The wireless power resonator of claim 4, wherein the matcher comprises at least one active element that adjusts the impedance of the wireless power resonator based on a control signal provided by a controller.

11. The wireless power resonator of claim 1, wherein the at least one capacitor, corresponding to a lumped element, is inserted between the first signal conducting portion and the second signal conducting portion.

12. The wireless power resonator of claim 1, wherein the at least one capacitor, corresponding to a distributed element, has a zigzagged structure.

13. The wireless power resonator of claim 1, wherein a capacitance of the at least one capacitor is determined based on at least one of criteria including a criterion for enabling the wireless power resonator to have a characteristic of a metamaterial, a criterion for enabling the wireless power resonator to have a negative magnetic permeability in a target frequency, and a criterion for enabling the wireless power resonator to have a zeroth-order resonance characteristic in the target frequency.

14. The wireless power resonator of claim 1, wherein a surface of the first signal conducting portion or a surface of the second signal conducting portion includes a plurality of conductor lines in parallel, and one end of each conductor line is shorted.

15. The wireless power resonator of claim 1, wherein the first signal conducting portion and the ground conducting portion are seamlessly connected to each other, and the second signal conducting portion and the ground conducting portion are seamlessly connected to each other.

16. The wireless power resonator of claim 1, wherein an internal portion of at least one of the first signal conducting portion, the second signal conducting portion, and the ground conducting portion is empty.

17. The wireless power resonator of claim 1, further comprising:

a magnetic core that penetrates the first signal conducting portion, the second signal conducting portion, and the ground conducting portion.

18. The wireless power resonator of claim 1, wherein, when the wireless power resonator comprises at least two transmission lines, the at least two transmission lines are connected in series, in parallel, or in a spiral, and at least one capacitor is inserted between a first signal conductor and a second signal conductor included in each transmission line.

19. A wireless power transmitter, comprising:

a pre-processor to generate a frequency and a current for wireless power transmission using energy supplied from a power supplier; and
a wireless power resonator to wirelessly transmit power using the current at the generated frequency,
wherein the wireless power resonator comprises:

a transmission line comprising a first signal conducting portion, a second signal conducting portion, and a ground conducting portion corresponding to the first signal conducting portion and the second signal conducting portion;
a first conductor to electrically connect the first signal conducting portion and the ground conducting portion;
a second conductor to electrically connect the second signal conducting portion and the ground conducting portion; and
at least one capacitor inserted between the first signal conducting portion and the second signal conducting portion in series with respect to a current flowing through the first signal conducting portion and the second signal conducting portion.

20. The wireless power transmitter of claim 19, wherein the transmission line, the first conductor, and the second conductor form a loop structure.

21. The wireless power transmitter of claim 19, further comprising:

a matcher, disposed inside a loop formed by the transmission line, the first conductor, and the second conductor, to determine an impedance of the wireless power resonator.

22. The wireless power transmitter of claim 19, wherein the pre-processor comprises:

an alternating current-direct current (AC/DC) converter to convert AC energy supplied from a power supplier into DC energy; and
a frequency generator to generate a current having a frequency based on the DC energy.

23. The wireless power transmitter of claim 19, further comprising:

a controller to generate a control signal based on at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

24. The wireless power transmitter of claim 19, further comprising:

a detector to detect at least one of a distance between the wireless power resonator and a wireless power resonator of a wireless power receiver, a reflection coefficient of a wave transmitted from the wireless power resonator to the wireless power resonator of the wireless power receiver, a power transmission gain between the wireless power resonator and the wireless power resonator of the wireless power receiver, and a coupling efficiency between the wireless power resonator and the wireless power resonator of the wireless power receiver.

25. The wireless power transmitter of claim 23, wherein the controller adjusts a frequency based on at least one of the distance between the wireless power resonator and the wireless power resonator of the wireless power receiver, the reflection coefficient of the wave transmitted from the wireless power resonator to the wireless power resonator of the wireless power receiver, the power transmission gain between the wireless power resonator and the wireless power resonator of the wireless power receiver, and the coupling efficiency between the wireless power resonator and the wireless power resonator of the wireless power receiver.

26. A wireless power receiver, comprising:

a wireless power resonator to receive power wirelessly; and
a rectifier to convert the received power into direct current (DC) energy,
wherein the wireless power resonator comprises:

a transmission line comprising a first conducting signal portion, a second signal conducting portion, and a ground conducting portion corresponding to the first signal conducting portion and the second signal conducting portion;
a first conductor to electrically connect the first signal conducting portion and the ground conducting portion;
a second conductor to electrically connect the second signal conducting portion and the ground conducting portion; and
at least one capacitor inserted between the first signal conducting portion and the second signal conducting portion in series with respect to a current flowing through the first signal conducting portion and the second signal conducting portion.

27. The wireless power receiver of claim 26, wherein the transmission line, the first conductor, and the second conductor form a loop structure.

**28.** The wireless power receiver of claim 26, further comprising:

a matcher, disposed inside a loop formed by the transmission line, the first conductor, and the second conductor, to determine an impedance of the wireless power resonator.

**29.** The wireless power receiver of claim 26, further comprising:

a controller to generate a control signal based on at least one of a distance between the wireless power resonator and a wireless power resonator of a wireless power transmitter, a reflection coefficient of a wave transmitted from the wireless power resonator of the wireless power transmitter to the wireless power resonator, a power transmission gain between the wireless power resonator and the wireless power resonator of the wireless power transmitter, and a coupling efficiency between the wireless power resonator and the wireless power resonator of the wireless power transmitter.

**30.** A wireless power transmitting method, the method comprising:

generating a frequency and a current for wireless power transmission using energy supplied from a power supplier; and
providing the frequency and the current to a wireless power resonator,
wherein the wireless power resonator comprises:

a transmission line comprising a first signal conducting portion, a second signal conducting portion, and a ground conducting portion corresponding to the first signal conducting portion and the second signal conducting portion;
a first conductor to electrically connect the first signal conducting portion and the ground conducting portion;
a second conductor to electrically connect the second signal conducting portion and the ground conducting portion; and
at least one capacitor inserted between the first signal conducting portion and the second signal conducting portion in series with respect to a current flowing through first signal conducting portion and the second signal conducting portion.

**31.** The method of claim 30, wherein the transmission line, the first conductor, and the second conductor form a loop structure.

**32.** The method of claim 30, wherein the wireless power resonator further includes a matcher, disposed inside a loop formed by the first conductor and the second conductor, to determine an impedance of the wireless power resonator.

**33.** A wireless power receiving method, the method comprising:

receiving power wirelessly, using a wireless power resonator;
converting the received power into direct current (DC) energy using a rectifier; and
providing the DC energy to a target device,
wherein the wireless power resonator comprises:

a transmission line comprising a first signal conducting portion, a second signal conducting portion, and a ground conducting portion corresponding to the first signal conducting portion and the second signal conducting portion;
a first conductor to electrically connect the first signal conducting portion and the ground conducting portion;
a second conductor to electrically connect the second signal conducting portion and the ground conducting portion; and
at least one capacitor inserted between the first signal conducting portion and the second signal conducting portion in series with respect to a current flowing through the first signal conducting portion and the second signal conducting portion.

**34.** The method of claim 33, wherein the transmission line, the first conductor, and the second conductor form a loop structure.

**35.** The method of claim 33, wherein the wireless power resonator further comprises a matcher, disposed inside a loop formed by the transmission line, the first conductor, and the second conductor, to determine an impedance of the wireless power resonator.

**36.** The method of claim 33, further comprising:

storing the DC energy in a power storage unit.

**37.** The method of claim 33, further comprising:

utilizing the DC energy as power for the target device.

**38.** A wireless power transmission/reception system, the system comprising:

a wireless power transmitter; and
a wireless power receiver,
wherein:

the wireless power transmitter comprises:

a pre-processor to generate a frequency and a current for wireless power transmission using energy supplied from a power supplier; and
a wireless power transmission resonator to transmit power wirelessly to the wireless power receiver using the current at the frequency,
the wireless power receiver comprises:

a wireless power reception resonator to receive power wirelessly from the wireless power transmitter; and
a rectifier to convert the received power into DC energy, and
at least one of the wireless power transmission resonator and the wireless power reception resonator comprises:

a transmission line comprising a first signal conducting portion, a second signal conducting portion, and a ground conducting portion corresponding to the first signal conducting portion and the second signal conducting portion;
a first conductor to electrically connect the first signal conducting portion and the ground conducting portion;
a second conductor to electrically connect the second signal conducting portion and the ground conducting portion; and
at least one capacitor inserted between the first signal conducting portion and the second signal conducting portion in series with respect to a current flowing through the first signal conducting portion and the second signal conducting portion.

**39.** The system of claim 38, wherein the at least one of the wireless power transmission resonator and the wireless power reception resonator further comprises a matcher, disposed inside a loop formed by the transmission line, the first conductor, and the second conductor, to determine an impedance of the wireless power resonator.

**FIG. 1**

## FIG. 2

<u>200</u>

FIRST SIGNAL CONDUCTING PORTION 211

CAPACITOR 220

SECOND SIGNAL CONDUCTING PORTION 212

CONDUCTOR 242

CONDUCTOR 241

h

CONDUCTOR 231

MATCHER 230

GROUND CONDUCTING PORTION 213

EP 2 453 519 A2

# FIG. 3

200

# FIG. 4

SEAM 250

200

FIRST SIGNAL
CONDUCTING
PORTION 211

CAPACITOR
220

SECOND SIGNAL
CONDUCTING
PORTION 212

CONDUCTOR
242

SEAM 250

CONDUCTOR
241

GROUND
CONDUCTING
PORTION 213

MATCHER
230

## FIG. 5

EMPTY SPACE

200

d mm

FIRST SIGNAL
CONDUCTING
PORTION 211

CAPACITOR
220

SECOND SIGNAL
CONDUCTING
PORTION 212

CONDUCTOR
242

260

CONDUCTOR
241

GROUND
CONDUCTING
PORTION 213

MATCHER
230

## FIG. 6

CONDUCTOR
LINES

200

220

FIRST SIGNAL
CONDUCTING
PORTION 211

CAPACITOR
220

GROUND FINISHING

270

SECOND SIGNAL
CONDUCTING
PORTION 212

MATCHER
230

GROUND
CONDUCTING
PORTION 213

**FIG. 7**

## FIG. 8

A :

CONDUCTOR
231

CONDUCTOR
232

CONDUCTOR
233

h

GROUND
CONDUCTING
PORTION 213

B :

CONDUCTOR
242

CONDUCTOR
231

CONDUCTOR
241

CONDUCTOR
232

CONDUCTOR
233

h

GROUND
CONDUCTING
PORTION 213

## FIG. 9

$$W_{MZR} = \frac{1}{\sqrt{L_R C_L}}$$

## FIG. 10

**FIG. 11**

## FIG. 12

|  | MNG RESONATOR FOR WIRELESS POWER TRANSMISSION |
| --- | --- |
| TYPE OF DOMINANT FIELD IN NEAR FIELD | MAGNETIC FIELD |
| MAJOR PROPERTY | MAGNETIC FIELD COUPLING |
| STRUCTURE | 3D |
| Q-FACTOR | AIM FOR HIGH Q |
| PURPOSES | WIRELESS POWER TRANSMISSION IN SHORT DISTANCE |

**FIG. 13**

**FIG. 14**

**FIG. 15**

## FIG. 16

1000

1020

1010

1025 DETECTOR → 1024 CONTROLLER

1021 AC/DC CONVERTER

1022 FREQUENCY GENERATOR

ENERGY →

1023 POWER AMPLIFIER

WIRELESS POWER TRANSMISSION RESONATOR

**FIG. 17**

1100